# EUROPEAN PATENT APPLICATION

(11) **EP 3 136 139 A1**
(43) Date of publication of application: **01.03.2017**
(21) Application number: 15783245.2
(22) Date of filing: 24.04.2015
(51) Int. Cl.: G02B 1/14, B32B 27/20, B32B 27/38, G02B 1/115, G02C 7/02

(54) **EYEGLASS LENS**

(30) Priority: 24.04.2014 JP 2014090745
(71) Applicant: Hoya Lens Thailand Ltd., Patumthani (TH)
(72) Inventor: SHIMADA, Akira, Tokyo 161-8525 (JP)
(74) Representative: Hoffmann Eitle
(86) International application number: PCT/JP2015/062598
(87) International publication number: WO 2015/163465

(57) **Abstract**

Provided is a spectacle lens in which excellent adhesive property is exhibited between a hard coat layer and a functional layer such as an antireflection layer formed on the hard coat layer. The spectacle lens is a spectacle lens which includes a lens substrate, a hard coat layer, and an antireflection layer and in which the hard coat layer has a film thickness of 10 µm or more and 50 µm or less and the hard coat layer is obtained by curing a curable composition containing inorganic oxide particles, a silane coupling agent, and a polyfunctional epoxy compound contained at 20% by mass or more and 40% by mass or less in a matrix component.

## Description

### Technical Field

The present invention relates to a spectacle lens having a hard coat layer.

### Background Art

Although spectacle lenses are required to have various properties, a nature to be hardly scratched as a user uses the spectacle lens in daily life, namely, abrasion resistance is required. Although a spectacle lens is required to exhibit various properties, a nature to be hardly scratched by the use in daily life by the user of the spectacle, namely, abrasion resistance is required. A hard coat layer is almost formed on spectacle lenses, particularly plastic spectacle lenses for the purpose of preventing scratches. Usually, the hard coat is deposited in a film thickness range of from 1 to 3 µm to impart abrasion resistance to the spectacle lens inusual use. In Patent Literature 1, a spectacle lens including hard coat having a thicker film thickness than the hard coat in the prior art is disclosed for the purpose of further suppressing the occurrence of interference fringes.

### Citation List

### Patent Literature

Patent Literature 1: JP 2010-128420 A

### Summary of Invention

### Technical Problem

According to the optical article described in Patent Literature 1, although it is possible to suppress the interference fringe and further to improve the abrasion resistance which has been hitherto said by using a functional layer including a hard coat layer, there is a problem that it is difficult to achieve adhesion between the hard coat layer and the antireflection film because of an increase in film thickness.

Accordingly, an object of the present invention is to provide a spectacle lens in which excellent adhesive property is exhibited between a hard coat layer and a functional layer such as an antireflection layer formed on the hard coat layer.

### Solution to Problem

The present invention relates to the following spectacle lens.
[1] A spectacle lens including a lens substrate, a hard coat layer, and an antireflection layer, in which the hard coat layer has a film thickness of 10 µm or more and 50 µm or less and the hard coat layer is obtained by curing a curable composition containing inorganic oxide particles, a silane coupling agent, and a polyfunctional epoxy compound contained at 20% by mass or more and 40% by mass or less in a matrix component.
[2] The spectacle lens according to [1], in which the inorganic oxide particles are silica particles.
[3] The spectacle lens according to [1] or [2], in which the silane coupling agent has an organic group bonded to a silicon atom and an alkoxy group bonded to a silicon atom.
[4] The spectacle lens according to any one of [1] to [3], in which the polyfunctional epoxy compound has two or three epoxy groups.
[5] The spectacle lens according to any one of [1] to [4], further including an interference fringe suppressing layer between the lens substrate and the hard coat layer.

### Advantageous Effects of Invention

According to the present invention, it is possible to provide a spectacle lens in which excellent adhesive property is exhibited between a hard coat layer and a functional layer such as an antireflection layer formed on the hard coat layer.

### Description of Embodiments

The spectacle lens of the present invention is a spectacle lens which includes a lens substrate, a hard coat layer, and an antireflection layer and in which the hard coat layer has a film thickness of 10 µm or more and 50 µm or less and the hard coat layer is obtained by curing a curable composition containing inorganic oxide particles, a silane coupling agent, and a polyfunctional epoxy compound contained 20% by mass or more and 40% by mass or less in a matrix component.

Excellent adhesive property is exhibited between a hard coat layer and a functional layer such as an antireflection layer formed on the hard coat layer as a polyfunctional epoxy compound is contained in the curable composition to be used in the formation of the hard coat layer in the above range.

A spectacle lens having a high film peeling off load value is obtained as the film thickness of the hard coat layer is 10 µm or more and 50 µm or less. In addition, the film thickness of the hard coat layer is preferably 15 µm or more and more preferably 18 µm or more from the viewpoint of obtaining a spectacle lens having a high film peeling off load value. The film thickness is preferably 40 µm or less and more preferably 30 µm or less from the viewpoint of suppressing the generation of initial cracks. The "film thickness" means an average film thickness, and the measuring method thereof is described in Examples.

The content of the polyfunctional epoxy compound in the curable composition to be used in the formation of the hard coat layer is 20% by mass or more and more preferably 25% by mass or more in the matrix component from the viewpoint of high adhesive property between the hard coat layer and a functional layer such as an antireflection layer formed on the hard coat layer. The content of the polyfunctional epoxy compound is 40% by mass or less in the matrix component. In the present specification, the matrix component means a silane coupling agent and a polyfunctional epoxy compound.

A hard coat layer exhibiting excellent adhesive property is obtained as the polyfunctional epoxy compound is added thereto.

Hereinafter, the configuration of the spectacle lens of the present invention will be described in detail.

### (Lens substrate)

Examples of the material to be used in the lens substrate of a spectacle lens may include plastics such as a polyurethane-based material (for example, polyurethane, polyurethane urea, polythiourethane), polycarbonate, and diethylene glycol-bis-allyl-carbonate and inorganic glass. The thickness and diameter of the lens substrate are not particularly limited. Usually, the thickness is about from 1 to 30 mm and the diameter is about from 50 to 100 mm. In a case in which the spectacle lens of the present invention is a spectacle lens for vision correction, it is usual to use those having a refractive index ne of about from 1. 5 to 1. 8 as the lens substrate. Colorless ones are usually used as the lens substrate, but it is also possible to use colored ones as long as the transparency is not impaired. In addition, the surface shape of the substrate on which a cured film is formed is not particularly limited, and it can be an arbitrary shape such as a flat shape, a convex shape, or a concave shape.

### [Functional layer]

In the spectacle lens of the present invention, the lens substrate is provided with at least the hard coat layer and the antireflection layer. Examples of other functional layers may include a primer layer, an interference fringe suppressing layer, a polarizing layer, and a photochromic layer. In addition, it is also possible to further provide functional layers such as an antiref lection layer, a water repellent film, an ultraviolet absorbing film, an infrared absorbing film, a photochromic film, and an antistatic film on the hard coat layer if necessary. With regard to functional layers other than these, known techniques related to spectacle lenses can be applied.

The hard coat layer may be directly formed on the lens substrate surface, or it may be indirectly formed thereon via one or more other functional layers.

The spectacle lens of the present invention preferably includes a lens substrate, a hard coat layer provided on the lens substrate, and an antiref lection layer provided on the hard coat layer, it preferably includes a lens substrate, a primer layer provided on the lens substrate, a hard coat layer provided on the primer layer, and an antireflection layer provided on the hard coat layer, and it more preferably includes a lens substrate, an interference fringe suppressing layer provided on the lens substrate, a primer layer provided on the interference fringe suppressing layer, a hard coat layer provided on the primer layer, and an antireflection layer provided on the hard coat layer.

### (Hard coat layer)

The hard coat layer is obtained, for example, by curing a curable composition containing inorganic oxide particles (hereinafter, referred to as the "component (A)"), a silane coupling agent (hereinafter, referredtoasthe "component (B) "), and a polyfunctional epoxy compound (hereinafter, referred to as the "component (C)").

Examples of the component (A) may include particles of tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), antimony oxide (Sb₂O₅), and the like, and the component (A) is preferably silicon oxide. These metal oxide particles may be used singly or two or more kinds thereof may be concurrently used. In addition, it is also possible to use composite oxide particles of two or more kinds of inorganic oxides. The particle size of the inorganic oxide particles is preferably in a range of from 5 to 3 0 nm from the viewpoint of achieving both abrasion resistance and optical properties. Among these inorganic oxide particles, silica particles are preferable from the viewpoint of obtaining excellent adhesive property with a functional layer such as an antireflection layer.

The component (B) is a silane coupling agent, and it is preferably a silane coupling agent having an organic group to be bonded to a silicon atom and a hydrolyzable group.

Examples of the hydrolyzable group may include an alkoxy group, an aryloxy group, and a hydroxyl group, and the hydrolyzable group is preferably an alkoxy group.

The silane coupling agent is preferably an organic silicon compound represented by the following general formula (I) or a hydrolysate thereof.

(R¹)ₐ(R³)_{b}Si(OR²)_{4-(a+b)} ... (I)

In the general formula (I), a is 1 and b is 0 or 1.

R¹ represents an organic group having a functional group such as an epoxy group such as a glycidoxy group, a vinyl group, a methacryloxy group, an acryloxy group, a mercapto group, an amino group, or a phenyl group, and preferably R¹ represents an organic group having an epoxy group. The functional group may be directly bonded to a silicon atom or indirectly bonded thereto via a linking group such as an alkylene group.

R² represents, for example, ahydrogenatom, an alkyl group, an acyl group, or an aryl group, and preferably R² represents an alkyl group.

The alkyl group represented by R² is, for example, a straight-chain or branched alkyl group having from 1 to 4 carbon atoms, and specific examples thereof may include a methyl group, an ethyl group, a propyl group, and a butyl group, and preferably the alkyl group is a methyl group or an ethyl group.

The acyl group represented by R² is, for example, an acyl group having from 1 to 4 carbon atoms, and specific examples thereof may include an acetyl group, a propionyl group, an oleyl group, and a benzoyl group.

The aryl group represented by R² is, for example, an aryl group having from 6 to 10 carbon atoms, and specific examples thereof may include a phenyl group, a xylyl group, and a tolyl group.

R³ can be an alkyl group or an aryl group.

The alkyl group represented by R³ is, for example, a straight-chain or branched alkyl group having from 1 to 6 carbon atoms, and specific examples thereof may include a methyl group, an ethyl group, a propyl group, a butyl group, a pentyl group, and a hexyl group.

The aryl group represented by R³ is, for example, an aryl group having from 6 to 10 carbon atoms, and specific examples thereof may include a phenyl group, a xylyl group, and a tolyl group.

Specific examples of the component (B) may include glycidoxymethyltrimethoxysilane, glycidoxymethyltriethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-lycidoxypropylvinyldimethoxysilane, γ-glycidoxypropylvinyldiethoxysilane, γ-glycidoxypropylphenyldimethoxysilane, γ-glycidoxypropylphenyldiethoxysilane,
vinyltrimethoxysilane, vinyltriacetoxysilane, vinyltrimethoxyethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)-γ-aminopropyltrimethoxysilane, N-(β-aminoethyl)-γ-aminopropylmethyldimethoxysilane, γ-aminopropylmethyldimethoxysilane, N-(β-aminoethyl)-γ-aminopropyltriethoxysilane, N-(β-aminoethyl)-γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane, and methylvinyldiethoxysilane.

Examples of the commercially available silane coupling agent may include the KBM-303, KBM-402, KBM-403, KBE402, KBE403, KBM-1403, KBM-502, KBM- 503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, and KBE-9007 of trade names manufactured by Shin-Etsu Chemical Co., Ltd.

The component (C) is a polyfunctional epoxy compound having two or more epoxy groups in one molecule, and preferably it is a polyfunctional epoxy compound having two or three epoxy groups in one molecule.

Specific examples of the component (C) may include aliphatic epoxy compounds such as 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxypivalate, trimethylolpropane diglycidyl ether, trimethylolpropane triglycidyl ether, glycerol diglycidyl ether, glycerol triglycidyl ether, diglycerol diglycidyl ether, diglycerol triglycidyl ether, diglycerol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether, diglycidyl ether of tris(2-hydroxyethyl) isocyanurate, and triglycidyl ether of tris(2-hydroxyethyl) isocyanurate, alicyclic epoxy compounds such as isophorone diol diglycidyl ether and bis-2,2-hydroxycyclohexylpropane diglycidyl ether, and aromatic epoxy compounds such as resorcinol diglycidyl ether, bisphenol A diglycidyl ether, bisphenol F diglycidyl ether, bisphenol S diglycidyl ether, orthophthalic acid diglycidyl ester, phenol novolac polyglycidyl ether, and cresol novolac polyglycidyl ether. As the component (C), a compound having two or three epoxy groups (bifunctional or trifunctional epoxy compound) is more preferable from the viewpoint of adhesive property with the adjacent layer or the lens substrate.

Examples of the commercially available polyfunctional epoxy compound may include the EX-201, EX-211, EX-212, EX-252, EX-313, EX-314, EX-321, EX-411, EX-421, EX-512, EX-521, EX-611, EX-612, EX-614, and EX-614B of "DENACOL" series of a trade name manufactured by Nagase ChemteX Corporation.

The curable composition is one that contains the components (A) to (C) described above, and it can be prepared by mixing optional components such as an organic solvent, a surfactant (leveling agent), and a curing catalyst with the above components if necessary.

The content of the component (A) is preferably 20% by mass or more, more preferably 30% by mass or more, and even more preferably 40% by mass or more in the solid of the curable composition, and it is preferably 80% by mass or less, more preferably 75% by mass or less, and even more preferably 70% by mass or less in the solid of the curable composition.

The content of the component (B) is preferably 5% by mass or more, more preferably 10% by mass or more, and even more preferably 15% by mass or more in the solid of the curable composition, and it is preferably 80% by mass or less, more preferably 75% by mass or less, and even more preferably 70% by mass or less in the solid of the curable composition.

The content of the component (C) is preferably 5% by mass or more, more preferably 8% by mass or more, and even more preferably 10% by mass or more in the solid of the curable composition, and it is preferably 40% by mass or less, more preferably 35% by mass or less, and even more preferably 30% by mass or less in the solid of the curable composition.

The filler/matrix ratio (hereinafter, also simply referred to as the "F/M ratio") is preferably 0.2 or more, more preferably 0.4 or more, and even more preferably 0.7 or more, and it is preferably 2.0 or less, more preferably 1.6 or less, and even more preferably 1.4 or less.

Incidentally, the F/M ratio means the mass ratio [component (A)/(component (B) + component (C))] of the component (A) to the total mass of the component (B) and the component (C).

The hard coat layer can be formed by coating a plastic lens substrate with the curable composition and subjecting the coated curable composition to a curing treatment (heat curing, photocuring, or the like) in accordance with the curable group. As the coating means of the curable composition, it is possible to apply a method that is usually used such as a dipping method, a spin coating method, a spray method. The curing treatment is usually conducted by heating. The curing treatment by heating can be conducted, for example, by placing a lens coated with the curable composition in an environment having an ambient temperature of from 50 to 150°C for about 30 minutes to 3 hours. On the other hand, the irradiation light for the curing treatment is, for example, an electron beam or ultraviolet light. The kind of irradiation light and the irradiation conditions are appropriately selected depending on the kind of component (C) . Generally, it is possible to form a hard coat layer which has a high strength and contributes to the improvement of abrasion resistance of the lens by irradiating the curable composition with ultraviolet light at an irradiation light dose of about from 500 to 2000 mJ/cm².

### (Primer layer)

The primer layer is, for example, an aqueous resin layer formed from an aqueous resin composition containing a resin component and an aqueous solvent.

The aqueous solvent contained in the aqueous resin composition is, for example, water or a mixed solvent of water and a polar solvent or the like, and it is preferably water. The solid concentration in the aqueous resin composition is preferably from 1 to 60% by mass and more preferably from 5 to 40% by mass from the viewpoint of liquid stability and film-forming property. The aqueous resin composition can also contain additives such as an antioxidant, a dispersant, and a plasticizer if necessary in addition to the resin component. In addition, a commercially available aqueous resin composition may be used by being diluted with a solvent such as water, an alcohol, or propylene glycol monomethyl ether (PGM).

The aqueous resin composition can contain resin component in a state of being dissolved in an aqueous solvent or a state of being dispersed as fine particles (preferably colloidal particles). Among them, the aqueous resin composition is desirably a dispersion in which the resin component is dispersed in an aqueous solvent (preferably water) in the form of fine particles. Inthiscase, the particle size of the resin component is preferably 0.3 µm or less from the viewpoint of dispersion stability of the composition. In addition, the pH of the aqueous resin composition is preferably about from 5.5 to 9.0 at 25°C from the viewpoint of stability. The viscosity of the aqueous resin composition is preferably from 5 to 500 mPa·s and more preferably from 10 to 50 mPa·s at 25°C from the viewpoint of coating suitability. In addition, an aqueous resin composition having the following film properties is preferable in consideration of physical properties of the aqueous resin layer to be formed. The coating film obtained by coating a glass plate with the aqueous resin composition so as to have a thickness of 1 mm and drying this for 1 hour at 120°C has a glass transition temperature Tg of from -58°C to 7°C, a pencil hardness of from 4B to 2H, and a tensile strength measured in conformity to JISK 7113 of from 15 to 69 MPa.

Examples of the resin component of the aqueous resin composition may include at least one kind selected from a polyurethane resin, an acrylic resin, or an epoxy resin, and preferably the resin component is a polyurethane resin. The aqueous resin composition containing a polyurethane resin, namely, an aqueous polyurethane resin composition can be prepared, for example, by subjecting a high molecular weight polyol compound and an organic polyisocyanate compound to a urethanization reaction in a solvent that is inert to the reaction and exhibits great affinity for water together with a chain extender if necessary to obtain a prepolymer, neutralizing this prepolymer, and then dispersing the prepolymer in an aqueous solvent containing a chain extender to increase the molecular weight. For such an aqueous polyurethane resin composition and the preparation method thereof, it is possible to refer to, for example, paragraphs [0009] to [0013] in JP 3588375 B1, the paragraphs [0012] to [0021] in JP 8-34897 A, paragraphs [0010] to [0033] in JP 11-92653 A, and paragraphs [0010] to [0033] in JP 11-92655 A. In addition, as the aqueous polyurethane resin composition, it is also possible to use a commercially available waterborne urethane as it is or by diluting it with an aqueous solvent if necessary. As the commercially available waterborne polyurethane, for example, it is possible to use the "EVAFANOL" series manufactured by NICCA CHEMICAL CO. , LTD. , the "SUPERFLEX" series manufactured by DKS Co., Ltd., the "ADEKA BONTIGHTER" series manufactured by ADEKA CORPORATION, the "OLESTER" series manufactured by Mitsui Chemicals, Inc., the "VONDIC" series and "HYDRAN" series manufactured by DIC Corporation, the "IMPRANIL" series manufactured by Bayer AG, the "SOFLANATE" series manufactured by Nippon Soflan the "POIZ" series manufactured by Kao Corporation, the "SANPRENE" series manufactured by Sanyo Chemical Industries, Ltd., the "IZELAX" series manufactured by Hodogaya Chemical CO. , LTD. , and the "NEOREZ" seriesmanufactured by Zeneca Group PLC.

It is possible to form an aqueous resin layer as a primer layer by coating the surface of a substrate with the aqueous resin composition and drying the aqueous resin composition.

As the coating method, a known coating method such as a dipping method or a spin coating method can be used. The coating conditions may be appropriately set so as to form a primer layer having a desired film thickness. Before coating, the polarizing film surface of the surface to be coated can also be subjected to a chemical treatment using an acid, an alkali, various kinds of organic solvents, or the like, a physical treatment using plasma, ultraviolet light, ozone, or the like, and a detergent treatment using various kinds of detergents. By conducting such a pretreatment, it is possible to improve the adhesive property.

After coating with the aqueous resin composition, an aqueous resin layer can be formed as a primer layer by drying the composition. The drying can be conducted, for example, by placing the member on which the primer layer is formed in an atmosphere of from room temperature to 100°C for from 5 minutes to 24 hours.

### (Interference fringe suppressing layer)

It is preferable that the spectacle lens of the present invention further includes an interference fringe suppressing layer between the lens substrate and the hard coat layer.

The interference fringe suppressing layer preferably has an optical film thickness of from 0. 2λ to 0. 3λ in the light having a wavelength λ of from 450 to 650 nm in order to suppress the interference fringe.

The interference fringe suppressing layer is obtained, for example, by coating with a dispersion containing at least inorganic oxide particles and a resin.

The inorganic oxide particles are used from the viewpoint of adjusting the refractive index of the interference fringe suppressing layer, and examples thereof may include particles of tungsten oxide (WO₃), zinc oxide (ZnO), silicon oxide (SiO₂), aluminum oxide (Al₂O₃), titanium oxide (TiO₂), zirconium oxide (ZrO₂), tin oxide (SnO₂), beryllium oxide (BeO), antimony oxide (Sb₂O₅), and the like, and the inorganic oxide particles may be used singly or two or more kinds thereof may be concurrently used. In addition, it is also possible to use composite oxide particles of two or more kinds of inorganic oxides. The particle size of the inorganic oxide particles is preferably in a range of from 5 to 30 nm from the viewpoint of optical properties.

Examples of the resin of the interference fringe suppressing layer may include at least one kind selected from a polyurethane resin, an acrylic resin, or an epoxy resin, and preferably the resin is a polyurethane resin and more preferably it is an aqueous resin composition containing a polyurethane resin, namely, an aqueous polyurethane resin composition. Preferred examples of the aqueous polyurethane resin composition may include the resins exemplified in the primer layer.

The dispersion may contain an aqueous solvent. The aqueous solvent is, for example, water or a mixed solvent of water and a polar solvent or the like, and preferably it is water. The solid concentration in the aqueous resin composition is preferably from 1 to 60% by mass and more preferably from 5 to 40% by mass from the viewpoint of liquid stability and film-forming property. The aqueous resin composition can also contain additives such as an antioxidant, a dispersant, and a plasticizer if necessary in addition to the resin component. In addition, a commercially available aqueous resin composition may be used by being diluted with a solvent such as water, an alcohol, or propylene glycol monomethyl ether (PGM).

### (Antireflection layer)

An antiref lection layer is provided on the hard coat layer. The antireflection layer, for example, has a configuration in which a low refractive index layer and a high refractive index layer are alternately disposed. The antireflection layer has preferably from 4 to 10 layers and more preferably from 5 to 8 layers.

The refractive index of the low refractive index layer is preferably from 1.35 to 1.80 and more preferably from 1.45 to 1. 50 at a wavelength of from 500 to 550 nm. The low refractive index layer is formed of an inorganic oxide, and preferably it is formed of SiO₂.

The refractive index of the high refractive index layer is preferably from 1.90 to 2.60 and more preferably from 2.00 to 2.40 at a wavelength of from 500 to 550 nm.

The high refractive index layer is, for example, formed of an inorganic oxide. The inorganic oxide used in the high refractive index layer is preferably at least one kind of inorganic oxide selected from ZrO₂, Ta₂O₅, Y₂O₃, TiO₂, Nb₂O₅, and Al₂O₃ and more preferably ZrO₂ or Ta₂O₅.

The spectacle lens of the present invention may have a hard coat layer and other functional layers only on the surface of the lens substrate or on the rear surface thereof as well. The spectacle lens is preferably a plastic lens for spectacle of which the lens substrate is a plastic.

### Examples

Hereinafter, the present invention will be described in more detail with reference to Examples, but the present invention is not limited to these Examples. Incidentally, the evaluation of the plastic lenses obtained in Examples and Comparative Examples were carried out as follows.

### [Average film thickness of hard coat layer]

The average film thickness of the hard coat layer was measured by using a lens substrate on which the hard coat layer was formed and a non-contact type film thickness measuring apparatus (non-contact film thickness measuring instrument FF 8 manufactured by SystemRoad co., Ltd.) by the optical interference method.

### [Diamond scratch test]

A diamond stylus having a tip curvature radius of 50 µm was installed to a continuous load type surface measuring machine (Type 22 manufactured by Shinto Scientific Co., ltd.), the spectacle lens and the diamond stylus were linearly relatively moved at a velocity of 10 mm/sec while gradually increasing the contact load between them at 1 g/sec to form scratches. The load was determined from the position at which the scratches started to be visually recognized under a fluorescent lamp and adopted as the "scratch generating load", and the scratches were observed under a microscope, and the load was determined from the position at which the surface film of the spectacle lens started to be cut and adopted as the "film peeling off load".

Incidentally, the color of the scratches to be formed is in a state indicating white as the surface film is cut. In this manner, scratches conspicuous even with a naked eye are formed when the surface film is cut.

### [AR adhesion]

On the basis of JIS K5600-5-6 (ISO 2409 1992), 10 x 10 pieces of grids were formed on a plastic lens including an antireflection layer, the peel test was conducted three times by using cellophane pressure-sensitive adhesive tape, and the remaining grids among the 100 pieces were counted.

### * Evaluation criteria

A number of peeled off square meshes of 0/100 to 2/100
B number of peeled off square meshes of 3/100 to 5/100
C number of peeled off square meshes of 6/100 or less

### [Example 1]

The primer liquid was applied on the resin substrate (plastic lens, tradename: EYNOA manufactured by HOYA CORPORATION, refractive index: 1.67) by a dipping method and dried and solidified for 20 minutes at 100°C to form a primer layer on both surfaces of the lens substrate, the hard coat liquid constituted by the following components was applied thereon by a spray method and dried for 20 minutes at 100°C to solidify the hard coat film. On the sample surface subjected to this hard coat, a silicon oxide layer of the first ground layer (low refractive index layer) was formed by a vacuum deposition method, and a zirconium oxide layer and a silicon oxide layer were alternately laminated thereon as the second layer to the seventh layer, thereby forming the antireflection layer (AR 1).

### [Examples 2 to 9 and Comparative Examples 1 to 3]

The plastic lenses were obtained in the same manner as in Example 1 except that the configurations of the primer layer, the hard coat layer, and the AR layer were as those presented in the following tables. The plastic lenses thus obtained were evaluated, and the results thereof are presented in the following tables. However, the hard coat liquid was applied by a dipping method only in Comparative Example 3.

### (Primer liquid)

PR1: one prepared by diluting an aqueous polyurethane resin composition (EVAFANOLHA-170manufacturedbyNICCA CHEMICAL CO. , LTD) 6-fold with propylene glycol monomethyl ether was used.

### (Component of hard coat liquid)

### [Organosilicon compound]

KBM403: γ-glycidoxypropyltrimethoxysilane (trade name: KBM403 manufactured by Shin-Etsu Chemical Co., Ltd.)

### [Polyfunctional epoxy compound]

EX-321: trimethylolpropane polyglycidyl ether (number of glycidyl group functional groups: bi- to tri-functional, trade name: EX-321 manufactured by Nagase ChemteX Corporation)

### [Inorganic oxide]

PGM-ST: SiO₂ sol (trade name: PGM-STmanufacturedbyNISSAN CHEMICAL INDUSTRIES, LTD.)
MeOH silica sol: SiO₂ sol (trade name: MeOH silica sol manufactured by NISSAN CHEMICAL INDUSTRIES, LTD.)

### [Others]

Leveling material: surfactant (trade name: Y7006 manufactured by Dow Corning Toray)
Aluminum-based catalyst: aluminum tris (acetylacetonate) (trade name: aluminum chelate A (W) manufactured by Kawaken Fine Chemicals Co., Ltd.)
Diluting solvent: methanol, PGM, 4-hydroxy-4-methyl-2-pentanone (DAA), water, and hydrogen chloride solution

### (Antireflection layer)

AR1: low refractive index material (SiO₂) and high refractive index material (ZrO₂)
AR2: low refractive index material (SiO₂) and high refractive index material (Ta₂O₅)
AR3: low refractive index material (SiO₂) and high refractive index material (Nb₂O₅)

Representation of the substrate in the table is as follows. 167: plastic lens for spectacle, trade name: EYNOA manufactured by HOYA CORPORATION, refractive index: 1.67

[Table 1]

**Table 1**

| Kind of hard coat liquid | Blended amount (parts by mass) | | | | | | | | Mass of solid (parts by mass) | | | Amount of polyfunctional epoxy compound in matrix component (% by mass) |
|---|---|---|---|---|---|---|---|---|---|---|---|---|
| | Inorganic oxide | | Silane coupling agent | | Polyfunctional epoxy compound | | Leveling agent | Aluminum-based catalyst | Inorganic oxide | Silane coupling agent | Polyfunctional epoxy compound | |
| | Kind | Amount | Kind | Amount | Kind | Amount | | | | | | |
| HC1 | PGM-ST+MeOH silica sol | 23+47 | KBM403 | 23 | EX321 | 11 | 1 | 2.8 | 21 | 16 | 11 | 40 |
| HC2 | PGM-ST+MeOH silica sol | 23+47 | KBM403 | 30 | EX321 | 5 | 1 | 2.0 | 21 | 21 | 5 | 20 |
| HC3 | PGM-ST+MeOH silica sol | 23+47 | KBM403 | 26 | EX321 | 8 | 1 | 2.0 | 21 | 19 | 8 | 30 |
| HC4 | PGM-ST+MeOH silica sol | 19+37 | KBM403 | 56 | EX321 | - | 1 | 2.0 | 17 | 40 | - | 0 |

[Table 2]

**Table 2**

| | Substrate | Primer layer | | Hard coat layer | | | AR layer |
|---|---|---|---|---|---|---|---|
| | | Kind | Film thickness [µm] | Kind | Ratio of epoxy | Film thickness [µm] | Kind of AR |
| Example 1 | 167 | PR1 | 1.6 | HC1 | 40 | 20 | AR1 |
| Example 2 | 167 | PR1 | 1.6 | HC2 | 20 | 20 | AR1 |
| Example 3 | 167 | PR1 | 1.6 | HC3 | 30 | 20 | AR1 |
| Example 4 | 167 | PR1 | 1.6 | HC3 | 30 | 20 | AR1 |
| Example 5 | 167 | PR1 | 1.6 | HC3 | 30 | 20 | AR1 |
| Example 6 | 167 | PR1 | 1.8 | HC1 | 40 | 10 | AR2 |
| Example 7 | 167 | PR1 | 1.8 | HC1 | 40 | 20 | AR2 |
| Example 8 | 167 | PR1 | 1.8 | HC1 | 40 | 30 | AR2 |
| Example 9 | 167 | PR1 | 1.8 | HC1 | 40 | 40 | AR2 |
| Comparative Example 1 | 167 | PR1 | 1.6 | HC4 | 0 | 20 | AR1 |
| Comparative Example 2 | 167 | PR1 | 1.8 | HC4 | 0 | 30 | AR2 |
| Comparative Example 3 | 167 | PR1 | 1 | HC4 | 0 | 3 | AR3 |

[Table 3]

**Table 3**

| | Spectacle lens | | | DS test | | AR adhesion |
|---|---|---|---|---|---|---|
| | Substrate | Hard coat layer | | Scratch generating load [gf] | Film peeling off load [gf] | |
| | | Ratio of epoxy*1 (% by mass) | Film thickness [µm] | | | |
| Example 1 | 167 | 40 | 20 | 120 | 296 | A |
| Example 2 | 167 | 20 | 20 | 120 | 241 | A |
| Example 3 | 167 | 30 | 20 | 120 | 298 | A |
| Example 4 | 167 | 30 | 20 | 120 | 300 | A |
| Example 5 | 167 | 30 | 20 | 120 | 263 | A |
| Example 6 | 167 | 40 | 10 | 85 | 185 | A |
| Example 7 | 167 | 40 | 20 | 100 | 265 | A |
| Example 8 | 167 | 40 | 30 | 60 | 387 | A |
| Example 9 | 167 | 40 | 40 | 60 | 450 | A |
| Comparative Example 1 | 167 | 0 | 20 | 120 | 295 | C |
| Comparative Example 2 | 167 | 0 | 30 | 100 | 390 | C |
| Comparative Example 3 | 167 | 0 | 3 | 30 | 74 | C |

| | | | | | | |
|---|---|---|---|---|---|---|
| *1 Amount of polyfunctional epoxy compound in matrix component (% by mass) | | | | | | |

It can be seen that a high film peeling off load and excellent scratch resistance are obtained as the film thickness of the hard coat layer is in a predetermined range when the results for Examples are compared with those for Comparative Examples. Additionally, it can be seen that a hard coat layer exhibiting excellent adhesive property with a functional layer such as an antireflection layer formed thereon as the ratio of the polyfunctional epoxy compound in the hard coat liquid is within a predetermined range.

## Claims

1. A spectacle lens comprising:
a lens substrate;
a hard coat layer; and
an antireflection layer, wherein
the hard coat layer has a film thickness of 10 µm or more and 50 µm or less, and
the hard coat layer is obtained by curing a curable composition containing inorganic oxide particles, a silane coupling agent, and a polyfunctional epoxy compound contained at 20% by mass or more and 40% by mass or less ina matrix component.

2. The spectacle lens according to claim 1, wherein the inorganic oxide particles are silica particles.

3. The spectacle lens according to claim 1 or 2, wherein the silane coupling agent has an organic group bonded to a silicon atom and an alkoxy group bonded to a silicon atom.

4. The spectacle lens according to any one of claims 1 to 3, wherein the polyfunctional epoxy compound has two or three epoxy groups.

5. The spectacle lens according to any one of claims 1 to 4, further comprising an interference fringe suppressing layer between the lens substrate and the hard coat layer.
